# EUROPÄISCHE PATENTSCHRIFT

(11) **EP 0 753 389 B1**
(45) Veröffentlichungstag und Bekanntmachung des Hinweises auf die Patenterteilung: **24.10.2001**
(21) Anmeldenummer: 96110632.5
(22) Anmeldetag: 02.07.1996
(51) Int. Cl.: B29C 44/10

(54) **Verfahren zur Herstellung von Polyurethanschaumformkörpern**
Method of making polyurethane foam articles
Procédé pour la production d'articles en mousse de polyuréthane

(30) Priorität: 14.07.1995 DE 19525663; 29.11.1995 DE 19544456
(43) Veröffentlichungstag der Anmeldung: 15.01.1997
(73) Patentinhaber: Hennecke GmbH, 51379 Leverkusen (DE)
(72) Erfinder: Sulzbach, Hans-Michael, 53639 Königswinter (DE)
(74) Vertreter: Drope, Rüdiger, Dr.

(56) Entgegenhaltungen:
- EP-A- 0 145 250
- WO-A-89/00918
- US-A- 4 783 292
- US-A- 4 851 167

## Beschreibung

Die Herstellung von Polyurethanschaumformkörpern erfolgt üblicherweise durch Einbringen einer ein Treibmittel enthaltenden Polyurethanreaktivmischung in einen Formhohlraum, wobei im Laufe des Ablaufs der Polyadditionsreaktion zwischen Isocyanat und isocyanatreaktiver Komponente der Mischung das Treibmittel freigesetzt wird, so dass die Reaktivmischung aufschäumt und den Formhohlraum erfüllt (Becker/Braun: Kunststoff-Handbuch, Band 7, 1983, Seiten 218 ff.)

Als Treibmittel werden sowohl niedrigsiedende Flüssigkeiten, wie niedermolekulare Chlorfluorkohlenwasserstoffe, Methylenchlorid, Pentan usw., eingesetzt, die aufgrund der Temperaturerhöhung der Reaktivmischung im Zuge des Ablaufs der exothermen Polyadditionsreaktion verdampfen, als auch Wasser, das aufgrund der Reaktion mit dem Isocyanat chemisch das Treibgas Kohlendioxid freisetzt.

Üblicherweise wird das Treibmittel der Polyolkomponente für die Polyadditionsreaktion zugemischt, die anschließend mit dem Isocyanat vermischt wird.

Es ist auch bereits bekannt, mindestens eine der Reaktionskomponenten der Polyadditionsreaktion zusätzlich mit Luft zu beladen, wobei die Luft Blasenkeime in Form feiner Luftbläschen bereitstellt, in die das Treibmittel freigesetzt wird, so dass eine gleichmäßige Porenstruktur entsteht.

Erfindungsgemäß wird nun vorgeschlagen, Kohlendioxid als Treibmittel einzusetzen, wobei das Kohlendioxid physikalisch unter Druck in der Polyurethanreaktivmischung gelöst wird. Dabei besteht das Problem, dass die Polyurethanreaktivmischung bei Entspannung auf Umgebungsdruck nahezu instantan unter Freisetzung des gelösten CO₂ aufschäumt, so dass ein Froth mit gegenüber der ungeschäumten Reaktivmischung wesentlich herabgesetztem Fließvermögen entsteht, der nicht ohne Erzeugung von Schaumfehlern durch Zerstörung von Schaumblasen in der Form verteilt werden kann.

Darüber hinaus kommt es beim Einfüllen eines solchen "steifen" Froth sowohl in die offene als auch in die geschlossene Form zu Luft- bzw. Treibmitteleinschlüssen, so dass die nach dem Aushärten erhaltenen Formschaumkörper große Lunker aufweisen.

Erfindungsgemäß wird nun vorgeschlagen, die CO₂ gelöst enthaltende Reaktivmischung in die geschlossene Form einzufüllen, wobei während des Einfüllens ein solcher Druck in der Form herrscht, daß höchstens ein Teil des gelösten CO₂ freigesetzt wird. Der Druck wird dabei so gewählt, daß die Reaktivmischung während des Einfüllens ein ausreichendes Fließvermögen beibehält, daß sie sich ohne Lufteinschlüsse in der Form verteilen kann.

Gegenstand der vorliegenden Erfindung ist ein Verfahren zur Herstellung von Polyurethanschaumformkörpern durch Einbringen einer ein Treibmittel enthaltenden Polyurethanareaktivmischung in einen Formhohlraum, das dadurch gekennzeichnet ist, daß
a) in der Polyurethanreaktivmischung als Treibmittel Kohlendioxid unter Druck gelöst wird,
b) die Reaktivmischung in den geschlossenen Formhohlraum eingebracht wird,
c) wobei während des Einbringens der Reaktivmischung in dem Formhohlraum ein Gasdruck aufrechterhalten wird, der ein (vollständiges) Aufschäumen der Reaktivmischung verhindert, und
d) der Gasdruck in dem Formhohlraum unter (gegebenenfalls weiterem) Aufschäumen der Reaktivmischung reduziert wird, bis die geschäumte Reaktivmischung den gesamten Formhohlraum ausfüllt.

Zur Erzeugung der Reaktivmischung wird vorzugsweise ein für den Schußbetrieb geeigneter Hochdruck-Gegenstrom-Injektionsmischkopf mit Reinigungskolben eingesetzt (s. Becker/Braun: Kunststoff-Handbuch, Band 7, Seiten 178 bis 182, 1993).

Vorzugsweise wird das Kohlendioxid in der Polyolkomponente vor deren Vermischung mit der Isocyanatkomponente zur Erzeugung der Polyurethanreaktivmischung gelöst.

Vorzugsweise kann die Menge an gelöstem Kohlendioxid zwischen 0,5 und 7 Gew.-% bezogen auf die Reaktivmischung, entsprechend einem Sättigungsdampfdruck für das gelöste Kohlendioxid von 1 bis 25 bar, betragen. Je nach der gelösten Menge an CO₂ werden Formschaumkörper einer Dichte von 25 bis 350 kg/m³ erhalten, wenn gelöstes CO₂ als einziges Treibmittel eingesetzt wird.

Eine merkliche Abnahme des Fließvermögens der Reaktivmischung und damit eine für die Verteilung in der Form nachteiliger Anstieg der Steifigkeit wird beobachtet, wenn die Schaumblasen eine solche Größe merklich überschreiten, bei der sie sich gegenseitig berühren, d.h. eine von der Kugelform abweichende Form annehmen.

Vorzugsweise beträgt daher der Forminnendruck während des Einleitens der Reaktivmischung mindestens 50 % des Sättigungsdampfdruckes des insgesamt ursprünglich gelösten CO₂.

Insbesondere bevorzugt ist ein Forminnendruck, der 70 bis 90 % des Sättigungsdampfdruckes beträgt, so daß während der Einleitung bereits etwa 10 bis 30 % des gelösten CO₂ freigesetzt ist. Für die gleichmäßige Verteilung im Formhohlraum ist es nämlich besonders günstig, wenn das eingeleitete Volumen bereits möglichst groß ist, solange noch ein ausreichendes Fließvermögen gewährleistet ist. Bei einfach gestalteten Formen, insbesondere mit ebener horizontaler Formhohlraumunterseite kann dagegen ohne Nachteil die Reaktivmischung völlig ungeschäumt, d.h. bei einem Forminnendruck, der oberhalb der Sättigungskonzentration für das ursprünglich gelöste CO₂ liegt, in die Form eingeleitet werden.

Ist die für den Formschaumformkörper vorbestimmte Menge an Reaktivmischung in die Form eingeführt, wird der Forminnendruck reduziert, bis die geschäumte Reaktivmischung gegebenenfalls nach Freisetzung eventuell mitverwendeter weiterer Treibmittel die gesamte Form ausfüllt.

Dabei kann über eine zeitliche Steuerung der Druckreduktion die Steiggeschwindigkeit des Schaumes so gesteuert werden, daß keine die Fließfähigkeit übersteigenden Scherkräfte im Schaum erzeugt werden.

Dadurch, daß zunächst die gesamte vorgesehene Menge an Reaktivmischung gegen den im Formhohlraum herrschenden Druck in die Form eingefüllt wird und erst anschließend oder kurz vor Ende des Einfüllvorganges der Druck im Formhohlraum reduziert wird, gelingt es, einen Schaumformkörper herzustellen, der eine gleichmäßige Porenstruktur aufweist.

Nach einer weiter bevorzugten Ausführungsform wird der Formhohlraum mittels einer Membran in einen Raum, in dem der Gasdruck aufrechterhalten wird und in einen Raum, in den die Reaktivmischung eingefüllt wird, unterteilt. Die Membran wird vor dem Schließen der Form in der Formtrennebene angeordnet. Anschließend wird der durch die Membran erzeugte eine Teil des Formhohlraums mit einem Gasdruck beaufschlagt, so daß sich die Membran an der Kontur des anderen Teils des Formhohlraums anlegt. Anschließend wird die Polyurethanreaktivmischung auf der dem Gasdruck gegenüberliegenden Seite der Membran eingeleitet. Nach Einleitung der vorgesehenen Menge an Reaktivmischung wird der Gasdruck auf der anderen Seite der Membran reduziert, wobei die Membran unter Aufschäumen der Reaktivmischung auf der anderen Seite des Formhohlraums angelegt wird.

Nach einer Ausführungsform dieser bevorzugten Ausführungsform der vorliegenden Erfindung kann die Membran aus einem von der Polyurethanreaktivmischung nicht benetzbaren Kunststoff, insbesondere Polyethylen oder Polytetrafluorethylen bestehen, so daß die Membran nach Aushärten und Entformen des Schaumformkörpers von dem Schaumformkörper getrennt werden kann.

Nach einer weiteren Ausführungsform kann die Membran aus einem von der Reaktivmischung benetzbaren und an dem Polyurethan haftenden Material, insbesondere ein gegebenenfalls imprägniertes Gewebe oder PVC oder Polypropylen bestehen, wobei die Membran als Kaschierung auf der Oberfläche des Schaumformkörpers verbleibt.

Nach einer weiter bevorzugten Ausführungsform weist die Kontur des Formhohlraums verschiebbare Elemente auf, die während des Einleitens der Reaktivmischung in den Formhohlraum hineingeschoben werden. Diese verschiebbaren Elemente der Kontur verkleinern während des Einleitens der Reaktivmischung das Volumen des Formhohlraumes. Besonders bevorzugt sind die verschiebbaren Konturelemente so gestaltet, daß eine Drosselung der einströmenden Reaktivmischung bewirkt wird, d.h. der Strömungsquerschnitt der Reaktivmischung unmittelbar nach dem Eintritt in den Formhohlraum derart reduziert wird, daß eine schnelle Verteilung der Reaktivmischung in von der Einleitöffnung entferntere Teile des Formhohlraumes bewirkt wird.

Im Falle der Teilung des Formhohlraumes mittels Membran in einen Gasdruckraum und einen Einfüllhohlraum ist vorzugsweise mindestens ein verschiebbares Element auf der Seite des Gasdruckraumes der Einfüllöffnung gegenüberliegend angeordnet.

Weitere verschiebbare Konturelemente können auf der Seite des Einfüllhohlraumes vorgesehen sein, wenn aufgrund der Kompliziertheit des Formholhraumes die Membran sich ohne irreversible Deformation nicht an der Kontur des Formhohlrauems vor Einfüllung der Reaktivmischung anlegen kann.

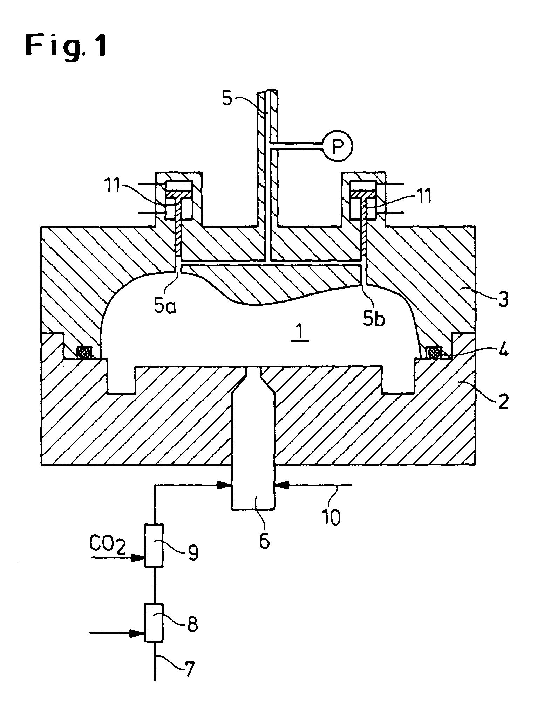

Die Erfindung wird nachfolgend anhand der beigefügten Fig. 1 bis 3 näher erläutert.

Fig. 1 zeigt einen Formhohlraum 1, der durch eine untere und eine obere Formhälfte 2, 3 gebildet wird und über eine Dichtung 4 gasdicht verschlossen wird. Über die Gaszufuhrleitung 5 wird im Formhohlraum 1 ein Gasdruck von z.B. 6 bar erzeugt. Dem Mischaggregat 6 zur Herstellung der Polyurethanreaktivmischung wird über Leitung 7 die Polyolkomponente, in der Luft zur Bereitstellung von Blasenkeimen gelöst wird (8) und z.B. 3,5 Gew.-% CO₂ gelöst wird, zugeführt. Ferner werden über Leitung 10 50 Gew.-Teile Isocyanat je 100 Gew.-Teile Polyol zugeführt. Nachdem der Formhohlraum 1 aus dem Mischaggregat 6 zu ca. 11 % mit der Kohlendioxid gelöst enthaltenden teilweise aufgeschäumten Reaktivmischung gefüllt ist, wird die Zufuhr von Reaktivmischung gestoppt und über die Gasleitung 5 der Gasdruck im Formhohlraum reduziert, bis die Reaktivmischung unter Aufschäumen den gesamten Formhohlraum erfüllt. Danach werden die Eintrittsöffnungen 5a und 5b der Gaszufuhrleitung 5 zum Formhohlraum 1 geschlossen, beispielhaft dargestellt durch die hydraulisch bewegbaren Kolben 11. Nach dem Aushärten der Reaktivmischung wird die Form geöffnet und der Formkörper entnommen. Die Dichte des Schaumes beträgt 92 kg/m³.

Wird der CO₂-Gehalt der Polyolkomponente auf 8 Gew.-% erhöht und die Reaktivmischung bei einem Forminnendruck von 14 bar in die Form eingefüllt (Füllgrad vor Entspannung 9%), erhält man einen Schaum der Dichte 38 kg/m³.

Ein Schaum etwa gleicher Dichte wird erhalten, wenn eine Polyolkomponente mit 3,5-Gew.-% CO₂ und 2 Gew.-% H₂O eingesetzt wird und die Reaktivmischung bei einem Forminnendruck von 6 bar in die Form eingefüllt wird (Füllgrad vor Entspannung 4,5%).

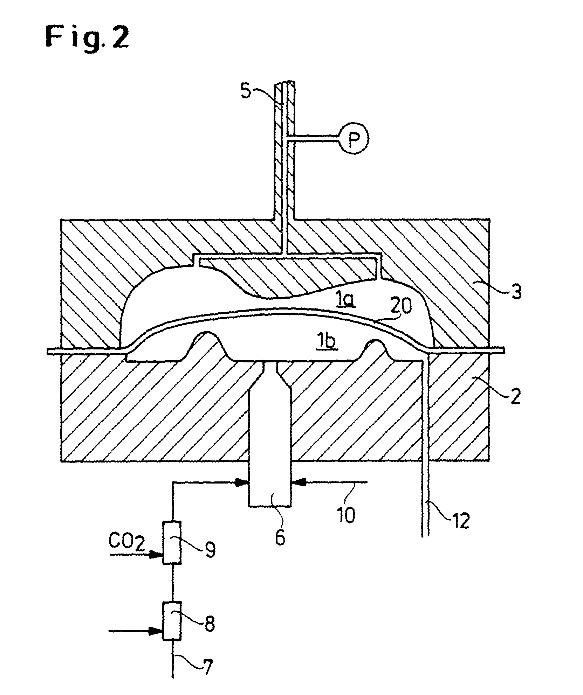

Bei der Ausführungsform der vorliegenden Erfindung gemäß Fig. 2 ist der Formhohlraum durch die Membran 20 in einen Gasdruckhohlraum 1a und einen Einfüllraum für die Polyurethanreaktivmischung 1b geteilt. Vor dem Einfüllen der Reaktivmischung aus dem Mischaggregat 6 wird der Gasraum 1a mit Druckgas beaufschlagt, so daß die Membran 20 an der Kontur der unteren Formhälfte 2 anliegt. Gegebenenfalls kann eine Vakuumleitung 12 zur Entfernung von Gasresten aus dem Einfüllhohlraum 1b vorgesehen sein. Die Reaktivmischung wird unter Verschieben der Membran 20 in den Einfüllraum 1b eingefüllt. Anschließend wird über Gasleitung 5 der Gasdruck im Gasraum 1a reduziert, bis aufgrund des Aufschäumens der Reaktivmischung im Einfüllraum 1b die Membran 20 an der Kontur der oberen Formhälfte 3 anliegt.

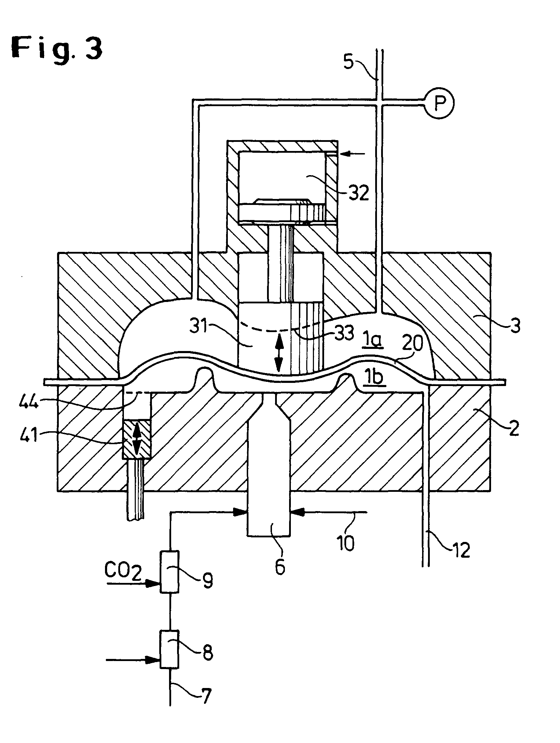

Fig. 3 zeigt eine Vorrichtung gemäß Fig. 2 mit Membran 20 zur Teilung des Formhohlraumes und Konturelementen 31 und 41.

Das in den Formhohlraum 1a hinein verschiebbare Konturelement 31 liegt der Einfüllöffnung des Mischaggregates 6 gegenüber und diehnt der Drosselung der einströmenden Reaktivmischung, so daß eine schnelle seitliche Verteilung der Reaktivmischung erzielt wird. Nach Beendigung des Einfüllens wird das Konturelement z.B. mittels Hydraulik bzw. Pneumatik 32 zur Ausbildung der gestrichelt angedeuteten Kontur 33 des herzustellenden Formkörpers zurückgefahren.

Das beispielhaft dargestellte verschiebbare Konturelement 41 wird vor dem Einfüllen der Reaktivmischung in den Formhohlraum 1b bis zur gestrichelten Linie 44 in den Formhohlraum hineingefahren, sodaß sich die Membran 20 ohne irreversible Deformierung anlegen kann. Im Zuge der Ablösung der Membran 20 von der Kontur des Hohlraumes 1b kann das Konturelement 41 in die dargestellte Stellung zurückgefahren werden.

## Patentansprüche

1. Verfahren zur Herstellung von Polyurethanschaumformkörpern durch Einbringen einer ein Treibmittel enthaltenden Polyurethanreaktivmischung in einen Formhohlraum (1), Aufschäumenlassen der Reaktivmischung, Aushärten und Entnahme aus dem Formhohlraum, **dadurch gekennzeichnet, dass**
a) die Polyurethanreaktivmischung als Treibmittel unter Druck gelöstes Kohlendioxid enthält,
b) die Reaktivmischung in den geschlossenen Formhohlraum eingebracht wird,
c) während des Einbringens der Reaktivmischung in dem Formhohlraum ein Gasdruck (P) aufrechterhalten wird, der ein vollständiges Aufschäumen der Reaktivmischung verhindert, und
d) der Gasdruck in dem Formhohlraum unter Aufschäumen der Reaktivmischung reduziert wird, bis die geschäumte Reaktivmischung den gesamten Formhohlraum ausfüllt.

2. Verfahren nach Anspruch 1, **dadurch gekennzeichnet, dass** der Formhohlraum (1) in der Formtrennebene durch eine flexible Membran (20) geteilt wird, der eine Teil (1a) des Formhohlraumes (1) mit Druckgas (P) derart beaufschlagt wird, dass die Membran an der Kontur des anderen Teils (1b) des Formhohlraumes (1) anliegt, die Reaktivmischung in den zweiten Teil (1b) des Formhohlraumes (1) eingeleitet wird und der Gasdruck in dem ersten Teil (1a) des Formhohlraumes (1) reduziert wird, bis die Membran aufgrund des Aufschäumens der Reaktivmischung an der Kontur des ersten Teils (1a) des Formhohlraumes (1) anliegt.

3. Verfahren nach Anspruch 1 oder 2, **dadurch gekennzeichnet, dass** die Reaktivmischung 0,5 bis 7 Gew.-% CO₂ gelöst enthält.

4. Verfahren nach einem der Ansprüche 1 bis 3, **dadurch gekennzeichnet, dass** der Forminnendruck während des Einfüllens mindestens 50 % des Sättigungsdampfdruckes des ursprünglich in der Reaktivmischung gelösten Kohlendioxids beträgt.

5. Verfahren nach einem der Ansprüche 1 bis 4, **dadurch gekennzeichnet, dass** die Reaktivmischung feinteilige Luftblasen als Blasenkeime für die Freisetzung von gelöstem CO₂ enthält.

6. Verfahren nach einem der Ansprüche 1 bis 5, **dadurch gekennzeichnet, dass** der Formhohlraum (1) mindestens ein der Einströmöffnung für die Reaktivmischung gegenüberliegendes, gegen die Einströmöffnung verschiebbares Konturelement (31) aufweist, das während des Einbringens der Reaktivmischung derart gegen die Einströmöffnung verschoben wird, dass eine schnelle seitliche Verteilung der Reaktivmischung im Formhohlraum (1) bewirkt wird.

7. Verfahren nach einem der Ansprüche 1 bis 6, **dadurch gekennzeichnet, dass** die Reaktivmischung in einem Hochdruck-Gegenstrom-Injektionsmischkopf erzeugt wird, wobei mindestens eine der dem Mischkopf zugeführten Komponenten CO₂ unter Druck gelöst enthält.

## Claims

1. Process for the manufacture of polyurethane foam mouldings by the introduction of a polyurethane reactive mixture containing a blowing agent into a mould cavity (1), foaming of the reactive mixture, curing and removal from the mould cavity, **characterized in that**
a) the polyurethane reactive mixture contains carbon dioxide dissolved under pressure as the blowing agent,
b) the reactive mixture is introduced into the closed mould cavity,
c) the gas pressure (P) maintained in the mould cavity during the introduction of the reactive mixture is such that complete foaming of the reactive mixture is prevented, and
d) the gas pressure in the mould cavity is reduced, with foaming of the reactive mixture, until the foamed reactive mixture fills the whole of the mould cavity.

2. Process according to Claim 1, **characterized in that** the mould cavity (1) is divided by a flexible membrane (20) in the mould parting plane, a gas pressure (P) is applied to one part (1a) of the mould cavity (1) so that the membrane is lying against the contour of the other part (1b) of the mould cavity (1), the reactive mixture is introduced into the second part (1b) of the mould cavity (1) and the gas pressure in the first part (1a) of the mould cavity (1) is reduced until the membrane is lying against the contour of the first part (1a) of the mould cavity (1) due to the foaming of the reactive mixture.

3. Process according to Claim 1 or 2, **characterized in that** the reactive mixture contains 0.5 to 7 wt.% of dissolved CO₂.

4. Process according to one of Claims 1 to 3, **characterized in that** the internal mould pressure during the filling process is at least 50% of the saturation vapour pressure of the carbon dioxide originally dissolved in the reactive mixture.

5. Process according to one of Claims 1 to 4, **characterized in that** the reactive mixture contains finely divided air bubbles as bubble nuclei for the release of dissolved CO₂.

6. Process according to one of Claims 1 to 5, **characterized in that** the mould cavity (1) has at least one contour element (31) which is opposite the inlet orifice for the reactive mixture and can be moved towards the inlet orifice, which contour element is moved towards the inlet orifice, during the introduction of the reactive mixture, so as to effect a rapid lateral distribution of the reactive mixture in the mould cavity (1).

7. Process according to one of Claims 1 to 6, **characterized in that** the reactive mixture is produced in a high-pressure countercurrent injection mixing head, at least one of the components fed into the mixing head containing CO₂ dissolved under pressure.

## Revendications

1. Procédé pour la préparation de corps moulés de polyuréthane par introduction d'un mélange réactif de polyuréthane contenant un agent moussant dans un espace creux de moule (1), par moussage du mélange réactif, par durcissement et prélèvement à partir de l'espace creux du moule, **caractérisé en ce que**
a) le mélange réactif de polyuréthane contient en tant qu'agent moussant du dioxyde de carbone dissous sous pression,
b) on introduit le mélange réactif dans l'espace creux du moule fermé,
c) on maintient pendant l'introduction du mélange réactif dans l'espace creux du moule une pression de gaz (P) qui empêche un moussage complet du mélange réactif, et
d) on réduit la pression de gaz dans l'espace creux du moule pendant le moussage du mélange réactif jusqu'à ce que le mélange réactif ayant moussé remplisse la totalité de l'espace creux du moule.

2. Procédé selon la revendication 1, **caractérisé en ce que** l'espace creux du moule (1) est séparé dans le plan de séparation du moule par l'intermédiaire d'une membrane flexible (20), une des parties (1a) de l'espace creux du moule (1) est comprimée avec du gaz sous pression (P) de telle sorte que la membrane se pose sur le contour de l'autre partie (1b) de l'espace creux du moule (1), on introduit le mélange réactif dans la deuxième partie (1b) de l'espace creux du moule (1) et on réduit la pression de gaz dans la première partie (1a) de l'espace creux du moule (1) jusqu'à ce que la membrane se pose sur le contour de la première partie (1a) de l'espace creux du moule (1) en raison du moussage du mélange réactif.

3. Procédé selon la revendication 1 ou 2, **caractérisé en ce que** le mélange réactif contient de 0,5 à 7 % en poids de CO₂ dissous.

4. Procédé selon l'une quelconque des revendications 1 à 3, **caractérisé en ce que** la pression interne dans le moule est pendant le remplissage d'au moins 50 % de la pression de vapeur saturante du dioxyde de carbone dissous à l'origine dans le mélange réactif.

5. Procédé selon l'une quelconque des revendications 1 à 4, **caractérisé en ce que** le mélange réactif contient de fines bulles d'air comme germes de bulles pour la libération du CO₂ dissous.

6. Procédé selon l'une quelconque des revendications 1 à 5, **caractérisé en ce que** l'espace creux du moule (1) présente au moins un élément de contour (31) coulissant contre l'ouverture d'entrée, disposé en face de l'ouverture d'entrée du mélange réactif, lequel peut être poussé contre l'ouverture d'entrée pendant l'introduction du mélange réactif de telle sorte qu'une distribution latérale rapide du mélange réactif est réalisée dans l'espace creux du moule (1).

7. Procédé selon l'une quelconque des revendications 1 à 6, **caractérisé en ce que** le mélange réactif est produit dans une tête de mélange par injection à contre-courant sous pression élevée, au moins un des constituants introduits dans la tête de mélange contenant du CO₂ dissous sous pression.
